**Europäisches Patentamt**

**European Patent Office**

**Office européen des brevets**

(19)

(11) Veröffentlichungsnummer: **0 361 333 B1**

(12) **EUROPÄISCHE PATENTSCHRIFT**

(45) Veröffentlichungstag der Patentschrift:
21.11.91 Patentblatt 91/47

(51) Int. Cl.$^5$: **F03B 13/00, F03B 15/00**

(21) Anmeldenummer: **89117572.1**

(22) Anmeldetag: **22.09.89**

(54) **Wasserarmatur, insbesondere für sanitäre Hausinstallationen.**

(30) Priorität: **27.09.88 CH 3580/88**

(43) Veröffentlichungstag der Anmeldung:
**04.04.90 Patentblatt 90/14**

(45) Bekanntmachung des Hinweises auf die Patenterteilung:
**21.11.91 Patentblatt 91/47**

(84) Benannte Vertragsstaaten:
**AT CH DE FR IT LI**

(56) Entgegenhaltungen:
**WO-A-85/01337**
**GB-A- 1 354 411**

(73) Patentinhaber: **KWC AG**
**Hauptstrasse 130**
**CH-5726 Unterkulm (CH)**

(72) Erfinder: **Hochstrasser, Ferdinand F.**
**Bündtenweg 217**
**CH-5105 Auenstein (CH)**

(74) Vertreter: **Patentanwälte Schaad, Balass & Partner**
**Dufourstrasse 101 Postfach**
**CH-8034 Zürich (CH)**

## Beschreibung

Die vorliegende Erfindung betrifft eine Wasserarmatur, insbesondere für sanitäre Hausinstallationen, gemäss dem Oberbegriff des Anspruchs 1.

Eine solche Wasserarmatur ist beispielsweise aus der unter der Nummer WO 85/01337 veröffentlichten internationalen Patentanmeldung bekannt. Diese offenbart einen Wasserspender, dessen Wasserdurchfluss mittels eines elektrisch ansteuerbaren Ventils einschalt- bzw. abschaltbar ist. Im Strömungskanal des Wasserspenders ist bezüglich des Ventils stromaufwärts ein vom Wasser beaufschlagtes Turbinenrad angeordnet, welches einen elektrischen Generator kleiner Leistung antreibt. Der Generator ist mit einer das Ventil ansteuernden Steueranordnung verbunden, dessen Akkumulator mit der vom Generator gelieferten Energie aufladbar ist. Der Strömungskanal des Wasserspenders weist eine Biegung von 90° auf, bezüglich welcher stromaufwärts das Turbinenrad vorgesehen ist, wobei die Drehachse des Turbinenrades mit der Längsachse des den Strömungskanal in diesem Bereich begrenzenden, rohrförmigen Gehäuses zusammenfällt. Der Generator ist mit der Turbine fluchtend ausserhalb des Gehäuses im Bereich der 90°-Biegung vorgesehen, wobei im Gehäuse eine Ausnehmung für das Durchführen der mit der Abtriebswelle des Turbinenrades gekoppelten Generatorwelle vorgesehen ist. Zwischen dem Generator und dem Gehäuse der Wasserarmatur ist ein durch die Ausnehmung im Gehäuse in den Strömungskanal vorstehendes, hutförmiges Dichtelement eingeklemmt, das eine in axialer Richtung verlaufende Bohrung für die Abtriebswelle des Turbinenrades bzw. die Antriebswelle des Generators aufweist. Zwischen der inneren Mantelfläche des Dichtelementes und der Antriebswelle des Generators ist eine O-Ringdichtung vorgesehen, welche weiter in axialer Richtung an der inneren Stirnfläche des Dichtelementes und dieser gegenüber an einer an der Generatorwelle vorgesehenen Dichtscheibe ansteht. Diese Dichtungsanordnung führt im Vergleich zur kleinen Leistung der Turbine zu erheblichen Verlusten. Ueberdies ist sie einer Abnützung und Alterung ausgesetzt, was dazu führen kann, dass Wasser in das Innere des Generators eindringt.

Es ist daher Aufgabe der vorliegenden Erfindung eine Wasserarmatur gemäss dem Oberbegriff des Anspruchs 1 zu schaffen, deren Verluste äusserst gering sind und deren Dichtungsanordnung alterungsunabhängig zuverlässig dicht ist.

Diese Aufgabe wird durch die Merkmale des kennzeichnenden Teiles des Anspruchs 1 gelöst.

Der Rotor des Generators ist bezüglich des Strömungskanales nicht abgedichtet, sondern rotiert im Wasser. Im Spalt zwischen dem Stator und dem Rotor ist ein im wesentlichen hohlzylindrisches Dichtelement vorgesehen, welches den Stator vom Wasser abtrennt. Es ist somit keine Verluste erzeugende und der Alterung ausgesetzte dynamische Dichtung mehr notwendig, sondern die Abtrennung zwischen dem mit Wasser gefüllten Raum und des Stators erfolgt durch eine statische Dichtung. Dadurch, dass die Erregung des Generators durch eine Permanentmagnetanordnung am Rotor erfolgt, sind keine stromführenden Teile im mit Wasser gefüllten Raum notwendig, was die Wasserarmatur erheblich vereinfacht und ihre Zuverlässigkeit erhöht.

In einer besonders bevorzugten und einfachen Ausführungsform gemäss Anspruch 2 ist der Rotor vom Dichtelement becherförmig umschlossen. Die Dichtungsanordnung im Generator ist somit einstückig ausgebildet und sie dient zugleich zur Lagerung des Rotors.

In einer besonders einfachen Ausführungsform sitzt der Stator auf dem Dichtelement. Dies erübrigt eine zusätzliche Halterung für den Stator.

Da der Rotor im Wasser dreht, können die Verluste mit einer Ausbildungsform gemäss Anspruch 5 minimalisiert werden.

Mit einem Drosselelement gemäss Anspruch 7 kann die Verkalkung des Generators verhindert werden, da der Austausch des im Rotorbereich vorhandenen Wassers unterbunden oder stark verlangsamt ist.

Bei einer ebenfalls bevorzugten Ausbildungsform gemäss Anspruch 8 ist das Dichtelement durch einen Teil des den Strömungskanal begrenzenden Gehäuses gebildet. Dies erlaubt einen äusserst einfachen Aufbau der Wasserarmatur und verhindert eine sonst notwendige Umlenkung des Wassers.

Eine besonders bevorzugte Wasserarmatur ist im Anspruch 10 definiert. Diese eine elektrische Steueranordnung und eine elektrisch-steuerbare Ventilanordnung aufweisende Wasserarmatur ist von einer externen Energiequelle unabhängig, was die Installation erheblich vereinfacht.

Bei einer Ausbildungsform gemäss Anspruch 11 wird das vom Generator erzeugte Signal auch für die Ermittlung des Wasserdurchflusses durch die Armatur verwendet. Es wird somit auf einfachste Weise ermöglicht, bei entsprechender Ausbildung der Steueranordnung, eine Mischarmatur zu schaffen, welche bei gegebener Mischwassertemperatur auch einen vorbestimmten Wasserdurchfluss ermöglicht.

Anspruch 12 definiert einen elektrischen Generator kleiner Leistung, das heisst von einigen Watt, der sich für die Verwendung in Wasserarmaturen eignet.

Weitere bevorzugte Ausbildungsformen sind in den weiteren abhängigen Ansprüchen angegeben.

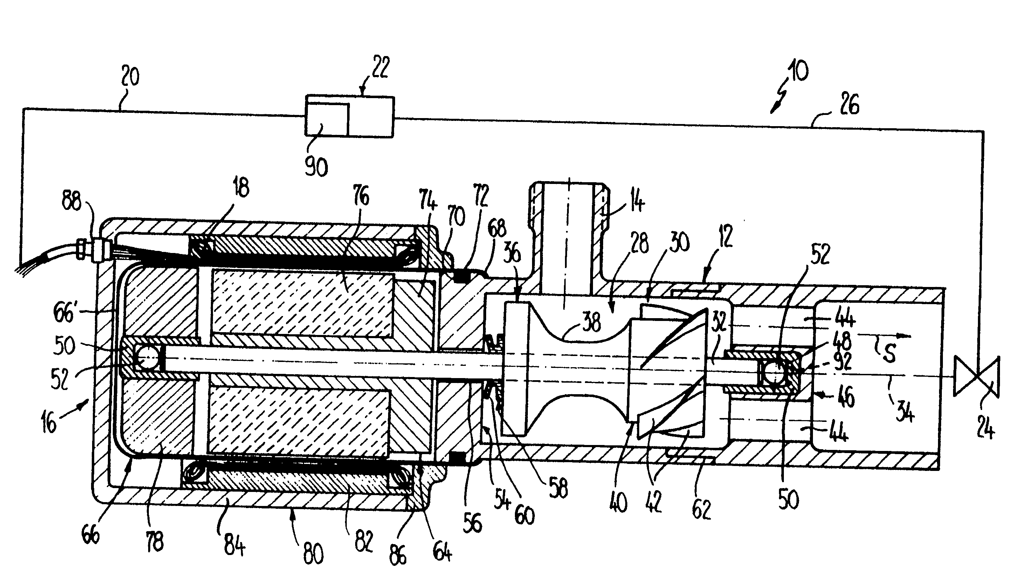

Die Erfindung wird nun anhand eines in der einzigen Figur schematisch dargestellten Ausführungsbeispiels näher beschrieben.

Die Wasserarmatur 10 weist ein im wesentlichen hohlzylindrisches Gehäuse 12, beispielsweise aus Messing, mit einem im radialer Richtung gegen aussen abstehenden Einlassstutzen 14 auf. In Verlängerung des Gehäuses 12 ist ein elektrischer Generator 16 vorgesehen, dessen Statorwicklung 18, wie mit einer Linie 20 angedeutet, mit einer elektrischen Steueranordnung 22 verbunden ist. In Strömungsrichtung S gesehen, ist dem Gehäuse 12 ein elektrisch ansteuerbares symbolisch dargestelltes Ventil 24 nachgeschaltet, welches über die elektrische Leitung 26 ebenfalls mit der Steueranordnung 22 verbunden ist.

Im Bereich des Einlassstutzens 14 ist im Innern des Gehäuses 12, das ja den Strömungskanal 28 für das Wasser umschliesst, ein Turbinenrad 30 vorgesehen, das auf einer Welle 32 drehfest sitzt, deren Drehachse 34 mit der Längsachse des Gehäuses 12 zusammenfällt.

Das Turbinenrad 30 weist einen zur Drehachse 34 rotationssymmetrischen Turbinenkörper 36 mit einer im Bereich des Einlassstutzens 14 vorgesehenen konkaven Ausnehmung 38 für die Umlenkung des durch den Einlasstutzen 14 zugeführten Wassers in die axiale Richtung. auf. In Strömungsrichtung S der Ausnehmung 38 folgend, ist am Turbinenkörper 36 ein zylindrischer Teil 40 vorgesehen, an welchem von der Mantelfläche in radialer Richtung abstehende, vom durchströmenden Wasser in axialer Richtung S beaufschlagte Turbinenschaufeln 42 angeordnet sind.

Bezüglich des Turbinenkörpers 36 stromabwärts weist das Gehäuse 12 im Innern eine mit mehreren in axialer Richtung verlaufenden Bohrungen 44 versehene Lagerungswand 46 für die Welle 32 auf. Auf der dem Turbinenkörper 36 zugewandten Seite ist in der Lagerungswand 46 ein Sackloch 48 vorgesehen, dessen Achse mit der Drehachse 34 zusammenfällt. In das Sackloch 48 ist eine hutförmige Lagerbüchse 50 aus Kunststoff eingesetzt, in deren Ausnehmung eine Lagerkugel 52 vorgesehen ist, an welcher sich die Welle 32 mit ihrem diesseitigen Ende in axialer Richtung abstützt. In radialer Richtung ist der Endbereich der Welle 32 von der Lagerbüchse 50 geführt.

Auf der bezüglich der Lagerungswand 46 andern Seite des Turbinenrades 30 weist das Gehäuse 12 an seinem Ende eine Wand 54 mit einer axialen Ausnehmung 56 für die Welle 32 auf. Auf der Welle 32 sitzt eine ringförmige Dichtung 58, die in axialer Richtung am Turbinenkörper 36 anliegt. Auf der der Wand 54 zugewandten Seite weist die Dichtung 58 eine dünne Dichtlippe 60 auf, welche an der Wand 54 anliegt.

Das Gehäuse 12 ist im Bereich der Turbinenschaufeln 42 in zwei Teilgehäuse unterteilt, wie dies mit der mit 62 bezeichneten Trennlinie angedeutet ist, um die Montage der im Innern des Gehäuses 12 angeordneten Teile zu ermöglichen. Die beiden Gehäuseteile werden nach der Montage entlang der Trennlinie 62 miteinander zu einem einzigen Gehäuse 12 zusammengefügt.

Auf der Welle 32 sitzt weiter der Rotor 64 des Generators 16, welcher von einem becherförmigen Dichtelement 66 umfasst ist. Das Dichtelement 66 besteht aus einem nicht magnetisierbaren Material, beispielsweise aus tiefgezogenem, austenitischem rostfreiem Stahl. Der offene Endbereich des Dichtelementes 66 überlappt das Gehäuse 12 im Bereich der Wand 54 und ist mittels einer Einbördelung 68 an diesem befestigt. Das Gehäuse 12 weist im Bereich dieser Ueberlappung eine in Umlaufrichtung umlaufende Nut 70 auf, in welcher ein O-Ring 72 vorgesehen ist.

Der Rotor 64 weist einen im Querschnitt T-förmigen, rotationssymmetrischen Tragkörper 74, beispielsweise aus Messing oder Kunststoff, auf. Auf dem Tragkörper 74 sitzt drehfest ein hohlzylinderförmiger Permanentmagnet 76, welcher lateral auf dem Umfang magnetisiert ist. Solche Permanentmagnete sind beispielsweise unter den Namen "FERROXDURE" von der Firma Philips erhältlich.

Im Innern des becherförmigen Dichtelementes 66 ist im Bereich dessen Bodens 66' ein Lagerungselement 78 vorgesehen, welches beispielsweise mit dem Dichtelement 66 verklebt ist. In einer zentralen Bohrung 80 des Lagerungselementes 78 ist eine weitere Lagerbüchse 50 eingesetzt, in welcher ebenfalls eine weitere Lagerkugel 52 vorgesehen ist, an welcher sich das diesseitige Ende der Welle 32 in axialer Richtung abstützt. In radialer Richtung ist der diesseitige Endbereich der Welle 32 von der Lagerbüchse 50 geführt.

Koaxial zum Rotor 64 sitzt auf dem becherförmigen Dichtelement 66 der Stator 80 mit seiner mehrphasigen Statorwicklung 18 und dem Weicheisenkörper 82. Der Stator 80 weist weiter eine den Weicheisenkörper 82 und die Statorwicklung 18 umschliessende Haube 84, beispielsweise aus Kunststoff auf, welche zusammen mit einem ringförmigen Kunststoffkörper 86, welcher auf der dem Gehäuse 12 zugewandten Seite des Weicheisenkörpers 82 dicht auf das Dichtelement 66 aufgesetzt ist, den Generator 16 gegen die Umgebung abschliesst. Mittels einer Stopfbüchse 88 sind die elektrischen Leiter der Statorwicklung 18 durch die Haube 84 hindurchgeführt. Dieser Generator 16 benötigt keinen Kommutator, was die Lebensdauer erheblich erhöht.

Diese elektrischen Leiter sind, wie mit der Linie 20 schematisch dargestellt, mit der Steueranordnung 22 verbunden. Diese weist einen schematisch angedeuteten und mit 90 bezeichneten Akkumulator auf, wobei vorzugsweise ein Nickel-Cadmium-, Blei-, oder wiederaufladbarer Lithium-Akkumulator vorgesehen sein kann. Dieser Akkumulator 90 wird mit der vom Generator 16 gelieferten Energie aufgeladen, wobei in der Steueranordnung 22 die Phasenspannungen des Generators 16 gleichgerichtet werden. Der Akkumulator 90 liefert die Energie für die gesamte Steueranordnung 22 und das Ventil 24, auch wenn der Wasserfluss durch die Wasserarmatur 10 infolge des geschlossenen Ventils 24 unterbrochen ist. Steueranordnungen 22 dieser Art sind bekannt und sind beispielsweise mit einem Näherungssensor verbunden, um das Ventil 24 zu öffnen, sobald der Näherungssensor ein Signal empfängt und dieses, beispielsweise nach einer bestimmten Zeit oder nach Beendigung des vom Näherungssensor empfangenen Signals, wieder zu schliessen.

Sobald das Ventil 24 geöffnet ist, beginnt das Wasser in Strömungsrichtung S zu fliessen, wodurch das Turbinenrad 30 zu drehen beginnt. Diese Drehbewegung wird mittels der Welle 32 auf den Rotor 64 übertragen, welcher in den Statorwicklungen 18 Wechselspannungen induziert. Die Frequenz dieser Wechselspannung ist proportional zur Drehzahl des Rotors 64. Dies ermöglicht bei entsprechender Auswertung in der Steueranordnung 22 die Berechnung des pro Zeiteinheit durch die Wasserarmatur 10 fliessenden Wassers. Falls es sich beim Ventil 24 um ein regelbares Ventil handelt, kann somit die Durchflussleistung der Wasserarmatur 10 auf einen vorbestimmten Wert eingestellt werden.

Die Dichtung 58 muss nicht absolut dichtend ausgebildet sein. Es ist vorgesehen, dass der vom becherförmigen Dichtelement 66 umschlossene Raum mit Wasser gefüllt ist. Die Dichtung 58 drosselt allerdings den Wasserfluss zwischen diesem Raum und dem vom Gehäuse 12 umschlossenen Raum, um die Kalkablagerung innerhalb des Generators 16 gering halten zu können. Die Reibungsverluste der Dichtung 58 sind verschwindend klein, da die Lippe 60 bei geschlossenem Ventil 24 und somit ja stillstehendem Turbinenrad 30 höchstens mit dem Druckunterschied zwischen dynamischem und statischem Druck des Wassers beaufschlagt wird, bei geöffnetem Ventil 24 und somit laufendem Turbinenrad 30 hingegen im Strömungskanal 28 nur der dynamische Wasserdruck ansteht, so dass die Lippe 60 höchstens mit der Kraft ihrer Eigenelastizität gegen die Wand 54 drückt.

Um die Axialkräfte der Welle 32 von der Lagerbüchse 50 besser aufnehmen zu können, ist es denkbar, dass an der inneren Stirnfläche der Lagerbüchse 50 ein gestrichelt angedeutetes Hartmetallplättchen 92 angeordnet ist, auf welchem sich die Lagerkugel 52 abstützt.

Es ist auch denkbar, dass der Permanentmagnet direkt am Turbinenrad vorgesehen ist. Das Gehäuse der Wasserarmatur besteht dann mindestens im Bereich des Permanentmagnetes aus einem nicht magnetisierbarem Material und ist in diesem Bereich hohlzylindrisch ausgeführt, und der Stator umgreift das Gehäuse im Bereich des Permanentmagnetes. Bei dieser Ausführungsform ist das Turbinenrad somit zugleich Rotor des Generators.

Die vom Generator abzugebende Leistung für den vorgesehenen Anwendungszweck beträgt höchstens einige Watt. Es ist somit ohne weiteres denkbar, dass der Generator auch für andere Zwecke verwendet werden kann, so beispielsweise als Drehzahlaufnehmer. Es ist aber auch möglich, diesen als Motor, beispielsweise zum Antrieb einer Pumpe kleiner Leistung, einzusetzen.

Selbstverständlich können anstelle des einen Permanentmagnetes mehrere Permanentmagnete für die Erregung vorgesehen sein.

Die Dichtung 58 kann auch weggelassen werden, dies insbesondere, wenn die Wasserarmatur 10 im Gebiet mit kalkarmem Wasser eingesetzt ist. Sie kann aber auch durch eine Filteranordnung ersetzt sein, die das Eindringen von Kalk in den Rotorraum herabsetzt oder verhindert.

Es ist auch denkbar, dass das elektrisch ansteuerbare Ventil dem Turbinenrad, in Strömungsrichtung gesehen, vorgeschaltet ist.

Die Wasserarmatur kann als Mischarmatur ausgebildet sein, wobei dann für die Regulierung des Warm- und des Kaltwassers je ein Ventil vorgesehen ist. Mittels einem Temperatursensor kann die Mischwassertemperatur gemessen werden, um diese auf einen gegebenen Wert zu regulieren.

## Patentansprüche

1. Wasserarmatur, insbesondere für sanitäre Hausinstallationen, mit einem Strömungskanal, mit einem in diesem angeordneten und vom durchströmenden Wasser beaufschlagten Turbinenrad, mit einem, vom Turbinenrad angetriebenen, elektrischen Generator und mit einer Dichtungsanordnung zum generatorseitigen Abdichten des Strömungskanals, dadurch gekennzeichnet, dass die Dichtungsanordnung ein im Spalt zwischen dem Stator (80) und dem Rotor (64) des Generators (16) ortsfest angeordnetes, den Strömungskanal (28) gegenüber dem Stator (80) abdichtendes, Dichtelement (66) aus einem nicht magnetisierbarem Material und der Rotor (64) eine Permanentmagnetanordnung (76) für die Erregung aufweist.

2. Wasserarmatur nach Anspruch 1, dadurch gekennzeichnet, dass das Dichtelement (66) den Rotor (64) becherförmig umschliessend ausgebildet ist und der Rotor (64) im Bereich des stirnseitigen Endes (66') des Dichtelementes (66) an diesem oder an einem im Dichtelement (66) gehaltenen Lagerungselement (78) drehbar gelagert ist.

3. Wasserarmatur nach Anspruch 1 oder 2, dadurch gekennzeichnet, dass der Stator (80) auf dem Dichtelement (66) sitzt.

4. Wasserarmatur nach einem der Ansprüche 1 bis 3, dadurch gekennzeichnet, dass der Rotor (64) und der Stator (80) koaxial zueinander angeordnet sind.

5. Wasserarmatur nach einem der Ansprüche 1 bis 4, dadurch gekennzeichnet, dass der Rotor (64) zylinderförmig ausgebildet ist und vorzugsweise die Permanentmagnetanordnung (76) einen zylinderförmigen Permanentmagneten aufweist.

6. Wasserarmatur nach Anspruch 2, dadurch gekennzeichnet, dass das Turbinenrad (30) und der Rotor (64) auf einer gemeinsamen Welle (32) sitzen, die im Bereich des stirnseitigen Endes (66') des Dichtelementes (66) an diesem oder am Lagerungselement (78) drehbar gelagert ist.

7. Wasserarmatur nach Anspruch 6, dadurch gekennzeichnet, dass im Bereich zwischen dem Turbinenrad (30) und dem Rotor (64) ein die Welle (32) umfassendes und am den Strömungskanal (28) begrenzenden Gehäuse (12, 54) anliegendes Drosselelement (58), vorzugsweise ein lippenförmiges Dichtungsorgan, vorgesehen ist.

8. Wasserarmatur nach Anspruch 1, dadurch gekennzeichnet, dass das den Strömungskanal begrenzende Gehäuse im Bereich der Permanentmagnetanordnung hohlzylindrisch ausgebildet ist und aus einem nicht magnetisierbaren Material besteht und der Stator das Gehäuse im Bereich der Permanentmagnetanordnung umfasst.

9. Wasserarmatur nach einem der Ansprüche 1 bis 8, dadurch gekennzeichnet, dass der Stator (80) eine mehrphasige Ankerwicklung (18) aufweist.

10. Wasserarmatur nach einem der Ansprüche 1 bis 9, dadurch gekennzeichnet, dass der Generator (16) mit einer elektrischen Steueranordnung (22) verbunden ist, die ein mit der vom Generator (16) erzeugten Energie aufladbares Speicherelement (90), vorzugsweise einen Akkumulator, aufweist, und dass eine mittels der Steueranordnung (22) elektrisch steuerbare Ventilanordnung (24) für die Regulierung des Wasserdurchflusses vorgesehen ist.

11. Wasserarmatur nach Anspruch 10, dadurch gekennzeichnet, dass die Steueranordnung (22) eine Auswerteeinheit aufweist, um aus dem vom Generator (16) gelieferten Signal den Wasserdurchfluss zu ermitteln.

12. Elektrischer Generator kleiner Leistung für die Verwendung in einer Wasserarmatur gemäss Anspruch 1, dadurch gekennzeichnet, dass ein im Spalt zwischen dem Rotor (64) und dem Stator (80) des Generators (16) ortsfest angeordnetes Dichtelement (66) vorgesehen ist, um den Stator (80) gegenüber dem von einem Medium umgebenen Rotor (64) abzudichten.

13. Elektrischer Generator nach Anspruch 12, dadurch gekennzeichnet, dass er die in einem oder in mehreren der Ansprüche 2 bis 5 und 9 aufgeführten Merkmale aufweist.

## Revendications

1. Robinetterie à eau en particulier pour installations sanitaires domestiques, comportant un canal d'écoulement, une roue de turbine disposée dans ce dernier et soumise à l'effet de l'eau passant dans ce canal, un générateur électrique, entraîné par la roue de turbine et un dispositif d'étanchéité destiné à rendre étanche le canal d'écoulement sur le côté du générateur, caractérisée en ce que le dispositif d'étanchéité comporte un élément d'étanchéité (66) disposé de façon fixe dans l'intervalle entre le stator (80) le rotor (64) du générateur (16), garantissant l'étanchéité du canal d'écoulement (28) par rapport au stator (80), cet élément étant réalisé en une matière non magnétisable et le rotor (64) comportant un système (76) à aimant permanent d'excitation.

2. Robinetterie à eau selon la revendication 1, caractérisée en ce que l'élément d'étanchéité (66) est réalisé de manière à entourer le rotor (64) à la façon d'un godet et en ce que le rotor (64) est monté à rotation dans la zone de l'extrémité (66') du côté frontal de l'élément d'étanchéité (66), sur ce dernier ou sur un moyen de logement (78), maintenu dans l'élément d'étanchéité (66).

3. Robinetterie à eau selon la revendication 1 ou 2, caractérisée en ce que le stator (80) repose sur l'élément d'étanchéité (66).

4. Robinetterie à eau selon l'une quelconque des revendications 1 à 3, caractérisée en ce que le rotor (64) et le stator (80) sont disposés de façon coaxiale l'un par rapport à l'autre.

5. Robinetterie à eau selon l'une quelconque des revendications 1 à 4, caractérisée en ce que le rotor (64) est de structure cylindrique et que le système à aimant permanent (76) comporte de préférence un aimant permanent cylindrique.

6. Robinetterie à eau selon la revendication 2, caractérisée en ce que la roue de turbine (30) et le rotor (64) sont montés sur un arbre commun (32) qui est rotativement logé dans la zone de l'extrémité (66') du côté frontal de l'élément d'étanchéité (66), sur ce dernier ou sur un moyen de logement (78).

7. Robinetterie à eau selon la revendication 6, caractérisée en ce qu'il est prévu, dans la zone comprise entre la roue de turbine (30) et le rotor (64), un étranglement (58) entourant l'arbre (32) et reposant sur le boîtier (12, 54) qui limite le canal d'écoulement (58), de préférence un élément d'étanchéité en forme de lèvre.

8. Robinetterie à eau selon la revendication 1, caractérisée en ce que le boîtier limitant le canal d'écoulement est réalisé sous forme d'un cylindre creux dans la zone du système à aimant permanent et se compose d'une matière non magnétisable, le stator entourant le boîtier dans la zone de ce système à aimant permanent.

9. Robinetterie à eau selon l'une quelconque des revendications 1 à 8, caractérisée en ce que le stator (80) comporte un enroulement (18) d'induit multiphasé.

10. Robinetterie à eau selon l'une des revendications 1 à 9, caractérisée en ce que le générateur (16) est relié à un dispositif électrique de commande (22) qui comporte un élément d'accumulation (90), de préférence un accumulateur, qui peut être chargé par l'énergie engendrée par le générateur (16), et en ce qu'il est prévu une valve (24) destiné à la régulation du courant d'eau, qui peut être commandée électriquement au moyen du dispositif de commande (22).

11. Robinetterie à eau selon la revendication 10, caractérisée en ce que le dispositif de commande (22) comporte un ensemble d'évaluation pour déterminer le courant d'eau à partir du signal fourni par le générateur (16).

12. Générateur électrique de petite puissance à utiliser dans une robinetterie à eau selon la revendication 1, caractérisé en ce qu'il est prévu un élément d'étanchéité (66) disposé de façon fixe dans l'intervalle entre le rotor (64) et le stator (80) du générateur (16), afin de rendre étanche le stator (80) vis-à-vis du rotor (64) entouré par un milieu.

13. Générateur électrique selon la revendication 12, caractérisé en ce qu'il présente une des particularités définies dans une ou plusieurs des revendications 2 à 5 et 9.

## Claims

1. A water appliance, in particular for domestic sanitary installations, with a flow duct with a turbine wheel arranged therein and acted on by the passing water, with an electric generator driven by the turbine wheel and with a sealing assembly for sealing the flow duct on the generator side, characterized in that the sealing assembly has a sealing element (66) fixedly arranged in the gap between the stator (80) and the rotor (64) of the generator (16) sealing the flow duct (28) against the stator (80), which element consists of a non-magnetizable material, and in that the rotor (64) has a permanent magnet arrangement (76) for the excitation.

2. A water appliance according to claim 1, characterized in that the sealing element (66) is given a cup-shaped design to surround the rotor (64), and in that the rotor (64) is, in the zone of the face end (66') of the sealing element (66), rotatably mounted thereon, or on a bearing element (78) held in the sealing element (66).

3. A water appliance according to claim 1 or 2, characterized in that the stator (80) is disposed on the sealing element (66).

4. A water appliance according to one of claims 1 to 3, characterized in that the rotor (64) and the stator (80) are arranged coaxially with respect to each other.

5. A water appliance according to one of claims 1 to 4, characterized in that the rotor (64) has a cylindrical design and in that the permanent magnet arrangement (76) preferably has a cylindrical permanent magnet.

6. A water appliance according to claim 2, characterized in that the turbine wheel (30) and the rotor (64) are disposed on a common shaft (32) which is, in the zone of the face end (66') of the sealing element (66), rotatably mounted thereon or on the bearing element (78).

7. A water appliance according to claim 6, characterized in that in the zone between the turbine wheel (30) and the rotor (64), provision is made for a throttling element (58), preferably a lip-shaped sealing member surrounding the shaft (32), and applied to the casing (12, 54) which delimits the flow channel (28).

8. A water appliance according to claim 1, characterized in that the casing delimiting the flow duct is given a hollow cylindrical design in the zone of the permanent magnet arrangement and that it consists of a non-magnetizable material and in that the stator surrounds the casing in the zone of the permanent magnet arrangement.

9. A water appliance according to one of claims 1 to 8, characterized in that the stator (80) has a polyphase armature winding (18).

10. A water appliance according to one of claims 1 to 9, characterized in that the generator (16) is connected to an electric control unit (22) having a storage element, preferably an accumulator that can be charged by the energy produced by the generator (16), and in that provision is made for a valve assembly (24) that can be electrically controlled by the control unit (22), for regulating the water flow.

11. A water appliance according to claim 10, characterized in that the control unit (22) has an evaluation unit to ascertain the water flow from the signal delivered by the generator (16).

12. A low power electric generator for use in a water appliance in accordance with claim 1, characterized in that provision is made for a sealing element (66) fixedly arranged in the gap between the rotor (64) and the stator (80) of the generator (16) to seal the stator (80) against the rotor (64) surrounded by a medium.

13. An electric generator according to claim 12, characterized in that it has the features indicated in one or several of the claims 2 to 5 and 9.

EP 0 361 333 B1